## Europäisches Patentamt

## European Patent Office

## Office européen des brevets

(19)

(11) Veröffentlichungsnummer: **0 082 944**
**B1**

(12)

# EUROPÄISCHE PATENTSCHRIFT

(45) Veröffentlichungstag der Patentschrift:
**27.12.85**

(21) Anmeldenummer: **82110454.4**

(22) Anmeldetag: **12.11.82**

(51) Int. Cl.⁴: **B 62 D 1/26,** B 62 D 6/04

(54) Rollenführungseinrichtung zur Verwendung an einem Fahrzeug.

(30) Priorität: **24.12.81 DE 3151411**

(43) Veröffentlichungstag der Anmeldung:
**06.07.83 Patentblatt 83/27**

(45) Bekanntmachung des Hinweises auf die Patenterteilung:
**27.12.85 Patentblatt 85/52**

(84) Benannte Vertragsstaaten:
**AT DE FR GB IT SE**

(56) Entgegenhaltungen:
**DE - A - 2 536 384**
**DE - A - 2 818 754**
**DE - B - 2 127 088**

(73) Patentinhaber: **M.A.N. MASCHINENFABRIK AUGSBURG-NÜRNBERG Aktiengesellschaft, Dachauer Strasse 667 Postfach 50 06 20, D-8000 München 50 (DE)**

(72) Erfinder: **Hagen, Hans, Dr.-Ing., Adalbertstrasse 10, D-8000 München 40 (DE)**

BUNDESDRUCKEREI BERLIN

## Beschreibung

Die Erfindung betrifft eine Rollenführungseinrichtung zur Verwendung an einem Fahrzeug, gemäß dem Oberbegriff des Anspruchs 1.

Bei einer solchen, aus der DE-B-2 127 088 be-kannten Rollenführungseinrichtung ist eine auto-matische Spurlenkung aus den folgenden Gründen problematisch:

Für die mechanische Spurführung werden an der Vorderachse eines Fahrzeugs seitlich an sta-tionären Lenkschienen (Sollspurführungen) lau-fende Rollen benützt, die unmittelbar auf das Lenkgestänge des Fahrzeugs einwirken und die Fahrzeugvorderräder entsprechend dem Verlauf der Sollspurführung automatisch »spurlenken«. Problematisch ist eine automatische Spurlenkung beim Durchfahren einer Weiche, wenn von der Geradeausrichtung abgewichen werden soll. Die Kinematik des Kurvenlaufs bedingt, daß die Hinterachse des Fahrzeugs immer auf einem kleineren Kreisdurchmesser läuft als die Vorderachse. Da die Spurführungsrollen aus Gründen eines minimalen Spurbreitenbedarfs so wenig wie möglich über die Fahrzeugaußenkontur hinausragen sollen, besteht somit die Gefahr, daß bei angelegter Vorderachs-Rolle an einer (radial inneren) beispielsweise kreisförmigen Sollspurführung die Hinterachse je nach Radius der Sollspurführung an dieser anläuft und ggf. diese überrollt. Um dies zu vermeiden, wird bisher an der Hinterachse des spurgelenkten nicht schienengebundenen Fahrzeugs eine sogenannte »Drängelrolle« vorgesehen, die »gewaltsam« die Hinterachse in der Spur hält. Hier treten aber sehr hohe Kräfte auf, die Verschleiß hervorrufen und die Führungsschienen unnötig belasten.

Ausgehend von dem vorgenannten Stand der Technik ist es Aufgabe der Erfindung, eine Rollenführungseinrichtung der eingangs genannten Art zu schaffen, die bei einfachem Aufbau und zuverlässigem Betrieb ein Durchfahren einer passiven Weiche (d. h. ohne mechanische Verstellung der Weiche) ohne zusätzliche Hilfsmittel wie einer Drängelrolle ermöglicht, wobei gleichzeitig sichergestellt sein soll, daß die Tastrollen sowenig wie möglich über die seitliche Fahrzeugaußenkontur hinausragen.

Gelöst wird die der Erfindung zugrundeliegende Aufgabe mit einer Rollenführungseinrichtung der im Oberbegriff des Anspruchs 1 angegebenen Art durch die im Kennzeichnungsteil des Anspruchs 1 angegebenen Merkmale.

Vorteilhafte Weiterbildungen der Erfindung sind in den Unteransprüchen angegeben.

Durch die Erfindung können demnach die Tastrollen von Rollenführungseinrichtungen, die jeder Fahrzeugseite zugeordnet sind, jeweils an der dem Weichenherz gegenüberliegenden Sollspurführungsseite unter einer Lenkvorspannung angelegt werden. Vor einem Durchfahren einer passiven Weiche betätigt der Fahrzeugführer den Richtungsschalter und aktiviert damit den Ausfahrvorgang der kurveninneren Tastrolle. Solange das Fahrzeug noch in der eingeengten (geschlossenen) Spur läuft, entsteht eine gewisse »Verspannung«, die durch den Hydraulikdruck in der Hydraulikzylindereinheit begrenzt werden kann. Das Anlegen der Lenkung erfolgt mit einer etwas unter der Verschiebekraft des Hydraulikzylinders liegenden Vorspannung, damit der ausgefahrene Zustand der Tast- oder Führungsrolle erhalten bleibt. Im Bereich der Führungsbahnerweiterung in einem Weichenbereich fährt das Fahrzeug zunächst geradeaus, bis der ausgefahrene Zustand der Tastrolle erreicht ist. Dann wird die zweite Vorspannung der Tastrolle wirksam, die dafür Sorge trägt, daß die Rolle in einem Abrolleingriff mit der zugeordneten ausgewählten Sollspurführung steht. Es erfolgt somit eine Einfahrt in die Kurve mit am Innenrand angelegter Rolle im ausgefahrenen Zustand. Ist die passive Weiche durchfahren, gelangt das Fahrzeug wiederum in eine beidseitig eingegrenzte Spur, durch die die ausgefahrene Rolle durch die zugeordnete Sollspurführung selbständig in die innere Stellung entgegen dem Hydraulikdruck der Hydraulikzylindereinheit zurückgedrückt wird. Der dabei anstehende Druck in der Hydraulikzylindereinheit wird dazu verwendet, den Richtungsschalter automatisch in seine Nullstellung zurückzustellen, so daß die »Abbiege-Hydraulik« ausgeschaltet wird.

Die Erfindung wird nachfolgend anhand zweier Ausführungsbeispiele unter Bezugnahme auf die Zeichnung näher beschrieben; es zeigt:

Fig. 1 schematisch den kinematischen Ablauf der Weichenfahrt und vereinfacht den Tastrol-lenbereich einer erfindungsgemäßen Rollenfüh-rungseinrichtung an der Vorderachse eines spur-zuregelnden nichtschienengebundenen Fahr-zeugs,

Fig. 2 eine andere Rollenführungseinrichtung nach der Erfindung.

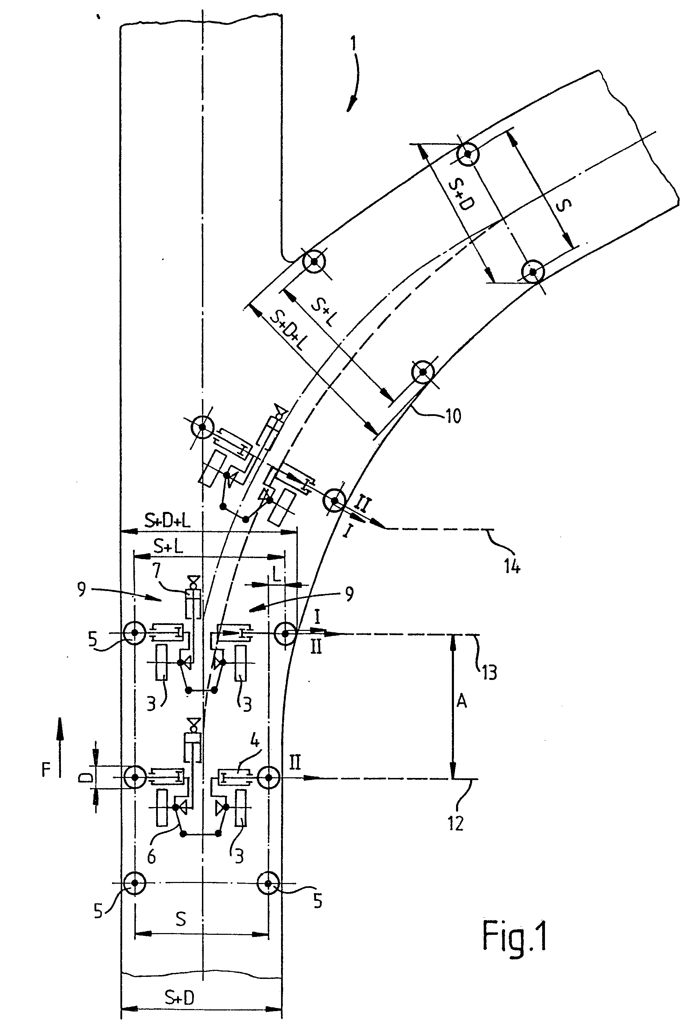

Gemäß Fig. 1 durchfährt ein nichtschienengebundenes spurgeregeltes Fahrzeug eine Weiche 1, wobei nach rechts abgebogen wird.

Das (nicht dargestellte) Fahrzeug besitzt an seinen durch ein Lenkgestänge 6 verbundenen Vorderrädern 3 jeweils eine Rollenhalterung 9. Die Rollenhalterung 9 ist in Form einer Hydraulik-zylindereinheit 4 ausgebildet, deren Kolbenstan-ge am freien Ende eine Tastrolle 5 frei drehbar abstützt. Die Hydraulikzylindereinheit 4 kann arbeitsraumseitig hydraulisch mit vorbestimmter Größe beaufschlagt werden, so daß eine (zwei-te) Vorspannung II entsteht, durch die die Tastrolle 5 um eine vorbestimmte Länge L ausgefahren werden kann, bevor eine automatische Spurlenkung eintritt, die durch die Sollspurführung 10 vorgezeichnet ist. Im eingefahrenen Zustand zweier zugehöriger Tastrollen 5 der Vorderachse befinden sich die den Durchmesser D aufweisenden Tastrollen 5 in einem Abstand S.

Im Betrieb bewegt sich das Fahrzeug gemäß Fig. 1 von unten in Fahrtrichtung F aus der verengten Spur S + D vor einer passiven Weiche 1 in den erweiterten Weichenbereich hinein. Kurz vor Eintritt in den Weichenbereich betätigt der Fahrzeugführer einen (nicht dargestellten) Kurvenrichtungsschalter nach rechts, um die gemäß Fig. 1 rechte Sollspurführung 10 für ein Abbiegen nach rechts als Leitschiene auszuwählen. Der Betätigungsschalter schafft eine hydraulische Vorspannung II vorbestimmter Größe, die eine gewisse Verspannung der Tastrolle 5 entstehen läßt, solange das Fahrzeug noch in der geschlossenen verengten Spur S + D vor der Weiche 1 läuft. Die Verspannung bewirkt jedoch nur einen minimalen Verschleiß infolge des Abrollvorgangs der Tastrolle an der zugeordneten Sollspurführung 10 und nimmt im praktischen Betrieb rasch ab infolge des Einfahrens des Fahrzeugs in die erweiterte Weiche, wo es der Kolbenstange der (rechten) Hydraulikzylindereinheit 4 längs der Strecke A gestattet ist auszufahren, die das Fahrzeug vom Kurvenbeginn 12 an in Geradeausfahrt bei zweiter Vorspannung II zurücklegt, bis die Kurveneinleitung 13 des Fahrzeugs beginnt. Im Verlauf des Einfahrens des Fahrzeugs längs der Strecke A in die Weiche 1 liegt die (rechte) Tastrolle 5 fortwährend an der zugeordneten Sollspurführung 10 an, bis die (rechte) Hydraulikzylindereinheit 4 bei 13 vollständig ausgefahren ist. Die (zweite) Vorspannung II der betätigten Hydraulikzylindereinheit 4 entfaltet nunmehr keine weitere Wirkung. Es wird nunmehr die mit dem Lenkgestänge 6 der Fahrzeugvorderachse mechanisch verbundene Lenkzylindereinheit 7 wirksam, die eine (erste) Lenkvorspannung I erzeugt, welche die gemäß Fig. 1 rechte Tastrolle 5 auch nach der Strecke A weiterhin in einem Abrolleingriff mit der Sollspurführung 10 hält. Das Fahrzeug erfährt hierdurch an seiner gelenkten Vorderachse den gewünschten Lenkeinschlag nach rechts, und es wird die Kurvenfahrt 14 unter der Vorspannung I + II durchgeführt. Die Lenkvorspannung (erste Vorspannung I) der Lenkzylindereinheit 7 liegt größenmäßig unter der Verschiebekraft des Hydraulikzylinders 4 (zweite Vorspannung). Damit ist sichergestellt, daß bei einer Weichenfahrt zuerst der betätigte Hydraulikzylinder 4 ausfahren kann, bis der eigentliche Lenkvorgang einsetzt.

Ersichtlich läuft demnach das Fahrzeug in der Weiche 1 noch eine Strecke A geradeaus, bis die Kurvenfahrt eingeleitet wird. Dadurch wird ein Freiraum für die Hinterachse des Fahrzeugs geschaffen und verhindert, daß die seitliche Fahrzeugaußenkontur im Bereich der Fahrzeughinterachse an die linke Sollspurführung 10 anläuft. Verschleiß und Beschädigung der Fahrzeugaußenkontur sowie der Sollspurführung durch die Kinematik des Kurvenlaufs sind damit ausgeschlossen.

Setzt das Fahrzeug nach einem Verlassen des Weichenbereichs seine Geradeausfahrt fort, verengt sich wiederum die Spur zu beiden Seiten. Dadurch wird die ausgefahrene Tastrolle 5 durch die Sollspurführung 10 selbständig wieder in die innere Stellung um die Länge L zurückgedrängt. Der dabei anstehende Hydraulikdruck der Hydraulikzylindereinheit wird zur Nullrückstellung des Richtungsschalters und zum Ausschalten der »Abbiege-Hydraulik« benützt.

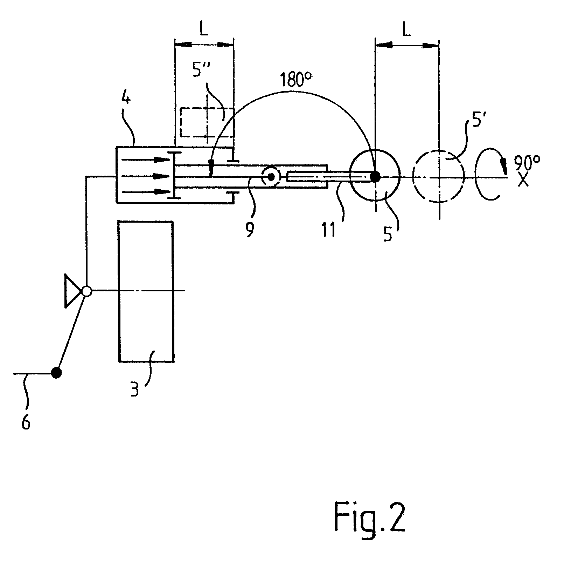

Die in der Fig. 2 veranschaulichte Einzelheit zeigt eine einem rechten Fahrzeugvorderrad 3 zugeordnete Rollenhalterung 9 in einer anderen Ausgestaltung. Die durch die Hydraulikzylindereinheit 4 um die Strecke L ausfahrbare Tastrolle 5, 5' ist an einem Schwenkarm 11 drehbar gehaltert, der seinerseits an der Kolbenstange der Hydraulikzylindereinheit 4 schwenkbar angelenkt ist. Bei einem spurgelenkten Fahrzeugbetrieb liegt die Längsachse x des Schwenkarms 11 in Verlängerung der Kolbenstangenachse. Wird die in Fig. 2 gezeigte Rollenführungseinrichtung nicht für eine automatische Spurlenkung benötigt, beispielsweise dann, wenn der Fahrzeuglenker das nichtschienengebundene Fahrzeug von Hand lenkt, kann die Rollenführungseinrichtung »zusammengeklappt« werden, so daß dann die Tastrolle 5'' nicht mehr über die Fahrzeugaußenkontur hinaus vorsteht.

Der Schwenkarm 11 erfährt hierbei durch eine (nicht dargestellte) Antriebseinrichtung eine Einwärtsschwenkung um 180° bei gleichzeitiger 90°-Drehung um seine Längsachse. Ersichtlich befindet sich dann die nicht benötigte Rollenführungseinrichtung in einer raumsparenden kompakten Anordnung, ohne seitlich am Fahrzeug in verkehrsgefährdender Weise vorzustehen.

## Patentansprüche

1. Rollenführungseinrichtung zur Verwendung an einem Fahrzeug, wobei eine an eine stationäre Sollspurführung (10) anlegbare und unter einer ersten Vorspannung (I) an der Sollspurführung abrollbare Tastrolle (5) eine mit dem Lenkgestänge einer Fahrzeugvorderachse verbundene Halterung (9) aufweist, dadurch gekennzeichnet, daß die Halterung (9) in Richtung der Sollspurführung (10) unter einer zweiten Vorspannung (II) um eine vorbestimmte Länge (L) ausfahrbar ist, wobei die Größe der ersten Vorspannung (I) unter der Größe der zweiten Vorspannung (II) liegt.

2. Rollenführungseinrichtung nach Anspruch 1, dadurch gekennzeichnet, daß die Halterung (9) an einer Hydraulikzylindereinheit (4) befestigt ist, die bei Durchfahren einer Weiche (1) arbeitsraumseitig mit vorbestimmter Größe hydraulisch beaufschlagt werden kann.

3. Rollenführungseinrichtung nach Anspruch 2, dadurch gekennzeichnet, daß die Hydraulikzylindereinheit (4) durch einen Richtungsschalter aktivierbar ist.

4. Rollenführungseinrichtung nach Anspruch 3, dadurch gekennzeichnet, daß nach einem Durchfahren einer Weiche (1) der Richtungsschalter automatisch deaktivierbar ist.

5. Rollenführungseinrichtung nach den Ansprüchen 1 bis 4, dadurch gekennzeichnet, daß für jedes Fahrzeugvorderrad eine Tastrollenhalterungseinheit mit zugeordneter Hydraulikzylindereinheit (4) vorgesehen ist.

6. Rollenführungseinrichtung nach den Ansprüchen 1 bis 5, dadurch gekennzeichnet, daß die Halterung (9) der Tastrolle (5) einen Haltearm und einen daran schwenkbar abgestützten Schwenkarm (11) umfaßt, der die Tastrolle (5) frei drehbar haltert und aus einer eingezogenen in eine im wesentlichen gestreckte Endlage schwenkbar ist.

7. Rollenführungseinrichtung nach Anspruch 6, dadurch gekennzeichnet, daß der Schwenkarm (11) zusätzlich um seine Längsachse (X) verdrehbar ist.

## Claims

1. A roller type guide system of use for a vehicle, a sensing roller (5) which is engageable with a stationary reference guide (10) and which is adapted to roll thereon when subject to a first preloading (I) having a mounting (9) which is connected to the steering linkage of a vehicle front axle, characterised in that the mounting (9) is adapted to be extended by a predetermined length (L) towards the reference guide (10) by a second preloading (II), the value of the first preloading (I) being less than the value of the second preloading (II).

2. A system according to claim 1, characterised in that the mounting (9) is attached to a reciprocating hydraulic actuator (4) whose working chamber is adapted to be hydraulically energized at a predetermined value during the negotiation of a junction (1).

3. A system accordig to claim 2, characterised in that the actuator (4) can be activated by a direction switch.

4. A system according to claim 3, characterised in that the direction switch is adapted to be deactivated automatically after a junction (1) has been negotiated.

5. A system according to claims 1—4, characterised in that a sensing roller and mounting unit with an associated reciprocating hydraulic actuator (4) is provided for each front wheel of a vehicle.

6. A system according to claims 1—5, characterised in that the mounting (9) of the sensing roller (5) comprises a retaining arm and, borne pivotally thereon, a pivoting arm (11) on which the roller (5) is mounted for free rotation and on which it is pivotable from a drawn-in position into a substantially extended end position.

7. A system according to claim 6, characterised in that the pivoted arm (11) is also rotatable around its longitudinal axis (X).

## Revendications

1. Installation de guidage à galets applicable à un véhicule, dans laquelle un galet de détection (5) qui peut rouler sur un moyen de guidage de consigne, fixe (10) de trajectoire, en s'appliquant contre ce moyen de guidage de consigne de trajectoire sous une première précontrainte I, comporte un support (9) relié à la tringlerie de direction de l'essieu avant d'un véhicule, caractérisé en ce que le support (9) peut être mis en position de sortie en direction du moyen de guidage de consigne de trajectoire (10), sous une seconde précontrainte II, et d'une longueur prédéterminée L, l'amplitude de la première précontrainte I étant inférieure à l'amplitude de la seconde précontrainte II.

2. Installation de guidage à galets selon la revendication 1, caractérisée en ce que le support (9) est fixé à un vérin hydraulique (4) qui lors du passage d'un aiguillage (1) peut recevoir dans sa chambre de travail, une solicitation hydraulique d'amplitude prédéterminée.

3. Installation de guidage à galets selon la revendication 2, caractérisée en ce que le vérin hydraulique (4) peut être mis en œuvre par un commutateur directionnel.

4. Installation de guidage à galets selon la revendication 3, caractérisée en ce qu'au passage d'un aiguillage (1), le commutateur directionnel est désactivé automatiquement.

5. Installation de guidage à galets selon les revendications 1 à 4, caractérisée en ce que pour chaque roue avant du véhicule il est prévu une unité de support de galets de détection à laquelle est associé un vérin hydraulique (4).

6. Installation de guidage à galets selon les revendications 1 à 5, caractérisée en ce que le support (9) du galet de détection (5) comporte un bras de fixation et un bras oscillant (11) porté de façon oscillante au bras de fixation et qui porte le galet de détection (5) libre en rotation, et peut basculer entre une position rentrée vers une position d'extrémité, essentiellement allongée.

7. Installation de guidage à galets selon la revendication 6, caractérisée en ce que le bras oscillant (11) peut, en outre, tourner autour de son axe longitudinal X.

Fig.1

Fig.2